# FASCICULE DE BREVET EUROPEEN

(11) **EP 4 060 621 B1**
(45) Date de publication et mention de la délivrance du brevet: **03.09.2025**
(21) Numéro de dépôt: 22164320.8
(22) Date de dépôt: 10.07.2019
(51) Int. Cl.: G06T 15/04

(54) **PROCÉDÉ DE TEXTURATION POUR RENDRE HYPERRÉALISTE UN MODÈLE TRIDIMENSIONNEL NUMÉRIQUE D'ORIGINE**
VERFAHREN ZUR TEXTURIERUNG, UM EIN DREIDIMENSIONALES DIGITALES ORIGINALMODELL HYPERREALISTISCH ZU MACHEN
TEXTURING PROCESS TO MAKE A DIGITAL THREE-DIMENSIONAL ORIGINAL MODEL HYPER-REALISTIC

(30) Priorité: 13.07.2018 FR 1856497
(43) Date de publication de la demande: 21.09.2022
(62) Demande divisionnaire de: 19736740.2
(73) Titulaire: Dental Monitoring, 75017 Paris (FR)
(72) Inventeur: SALAH, Philippe, 75020 Paris (FR); PELLISSARD, Thomas, 75004 Paris (FR); GHYSELINCK, Guillaume, 59169 Cantin (FR); DEBRAUX, Laurent, 75020 Paris (FR)
(74) Mandataire: Novagraaf Group

(56) Documents cités:
- TARINI M ET AL: "TEXTURING FACES", PROCEEDINGS GRAPHICS INTERFACE 2002. CALGARY, ALBERTA, CANADA, MAY 27 - 29, 2002; [GRAPHICS INTERFACE], TORONTO : CIPS, US, vol. CONF. 28, 27 May 2002 (2002-05-27), pages 89 - 98, XP001232461, ISBN: 978-1-56881-183-3
- CHENGLEI WU ET AL: "Model-based teeth reconstruction", ACM TRANSACTIONS ON GRAPHICS, ACM, NY, US, vol. 35, no. 6, 11 November 2016 (2016-11-11), pages 1 - 13, XP058306285, ISSN: 0730-0301, DOI: 10.1145/2980179.2980233
- ANTONIA CRESWELL ET AL: "Generative Adversarial Networks: An Overview", ARXIV.ORG, CORNELL UNIVERSITY LIBRARY, 201 OLIN LIBRARY CORNELL UNIVERSITY ITHACA, NY 14853, 19 October 2017 (2017-10-19), XP080829988

## Description

### Domaine technique

La présente invention concerne le domaine de l'analyse de photos d'arcades dentaires.

Elle se rapporte en particulier à des procédés pour rendre hyperréalistes des modèles tridimensionnels et des vues de tels modèles, créer une base d'apprentissage destinée à l'entrainement d'un réseau de neurones à partir de ces vues hyperréalistes, et analyser des photos d'arcades dentaires avec le réseau de neurones ainsi entrainé.

### Etat de la technique

Les techniques les plus récentes utilisent des réseaux de neurones pour évaluer des situations dentaires à partir d'images, classiquement des radiographies, notamment pour l'identification *post mortem.*

La publication de TARINI M et AL. « Texturing faces », Proceedings graphies interface 2002. Calgary, Alberta, Canada, May 27-29, 2002; Graphics interface, Toronto: CIPS, US, vol. CONF 28, 27 mai 2002, pages 89-98, décrit une méthode de génération de texture pour des modélisations faciales à partir de photographies.

La publication de CHENGLEI WU et AL., "Model-based teeth reconstruction", ACM Transactions on graphics, ACM, NY, US, vol. 35, no. 6, 11 novembre 2016, pages 1-13, décrit une méthode de reconstruction dentaire.

Un « réseau de neurones » ou « réseau neuronal artificiel » est un ensemble d'algorithmes bien connu de l'homme de l'art. Le réseau de neurones peut être en particulier choisi parmi :
- les réseaux spécialisés dans la classification d'images, appelés « CNN » (« Convolutional neural network »), par exemple
   - AlexNet (2012)
   - ZF Net (2013)
   - VGG Net (2014)
   - GoogleNet (2015)
   - Microsoft ResNet (2015)
   - Caffe: BAIR Reference CaffeNet, BAIR AlexNet
   - Torch:VGG_CNN_S,VGG_CNN_M,VGG_CNN_M_2048,VGG_CNN_M_10 24,VGG_CNN_M_128,VGG_CNN_F,VGG ILSVRC-2014 16-layer,VGG ILSVRC-2014 19-layer,Network-in-Network (Imagenet & CIFAR-10)
   - Google : Inception (V3, V4).
- les réseaux spécialisés dans la localisation, et détection d'objets dans une image, les Object Detection Network, par exemple:
   - R-CNN (2013)
   - SSD (Single Shot MultiBox Detector : Object Detection network), Faster R-CNN (Faster Region-based Convolutional Network method : Object Detection network)
   - Faster R-CNN (2015)
   - SSD (2015).

La liste ci-dessus n'est pas limitative.

Pour être opérationnel, un réseau de neurones doit être entrainé par un processus d'apprentissage appelé *« deep learning »,* à partir d'une base d'apprentissage non pairée ou pairée.

Une base d'apprentissage pairée est constituée d'un ensemble d'enregistrements comportant chacun une image et un descriptif de l'image. En présentant les enregistrements en entrée du réseau de neurones, ce dernier apprend progressivement comment générer un descriptif pour une image qu'on lui présente.

Par exemple, chaque enregistrement de la base d'apprentissage peut comporter une image d'une arcade dentaire et un descriptif identifiant, dans cette image, les représentations des dents, ou « zones de dent », et les numéros de dent correspondant. Après avoir été entrainé, le réseau de neurones pourra ainsi identifier, sur une image qu'on lui présente, les représentations des dents et les numéros de dent correspondant.

La qualité de l'analyse réalisée par le réseau de neurones dépend directement du nombre d'enregistrements de la base d'apprentissage. Classiquement, la base d'apprentissage comporte plus de 10 000 enregistrements.

Dans le domaine dentaire, la création d'un grand nombre d'enregistrements est rendue difficile par le nombre limité d'images produites, en particulier par les orthodontistes et les dentistes, et par le caractère généralement confidentiel de ces images.

La qualité de l'analyse réalisée par le réseau de neurones dépend aussi de la qualité des descriptifs des enregistrements de la base d'apprentissage. Classiquement, ces descriptifs sont générés par un opérateur qui délimite, au moyen d'un ordinateur, les zones de dent et qui, après avoir identifié la dent correspondante, par exemple « canine supérieure droite », leur affecte un numéro en conséquence. Cette opération est appelée « labelling ». Si l'opérateur se trompe dans l'identification de la dent ou lors de la saisie, le descriptif est erroné et la qualité de l'entrainement en est dégradée.

Les opérateurs qui procèdent au labelling peuvent avoir des interprétations différentes d'une même image. La qualité de la base d'apprentissage dépendra donc des interprétations adoptées par les opérateurs.

Il existe donc un besoin permanent pour un procédé de création d'une base d'apprentissage de qualité supérieure.

Un but de l'invention est de répondre à ce besoin.

### Résumé de l'invention

L'invention propose un procédé d'enrichissement d'une base d'apprentissage historique, selon la revendication 4.

Comme on le verra plus en détail dans la suite de la description, un procédé d'enrichissement selon l'invention a recours à des modèles, et notamment à des scans réalisés par les professionnels de soins dentaires, pour créer des vues hyperréalistes équivalentes à des photos. L'invention permet ainsi, avantageusement, de générer une base d'apprentissage permettant d'entrainer un réseau de neurones à l'analyse de photos, alors même que la base d'apprentissage ne comporte pas nécessairement de photos.

A l'étape 1), on génère une description du modèle historique et, à l'étape 3), on crée, au moins en partie, le descriptif historique à partir de la description du modèle historique.

De préférence, le modèle historique est découpé en modèles élémentaires, puis, à l'étape 1), on génère, dans la description du modèle historique, une description spécifique pour un modèle élémentaire, de préférence pour chaque modèle élémentaire représenté sur la vue hyperréaliste, et à l'étape 3), on inclut dans le descriptif historique, un descriptif spécifique pour la représentation dudit modèle élémentaire sur la vue hyperréaliste, au moins une partie du descriptif spécifique étant héritée de ladite description spécifique.

Par exemple, on crée des modèles élémentaires représentant les dents, ou « modèles de dent », dans le modèle historique, et, dans la description du modèle historique, on crée une description spécifique pour chaque modèle de dent, par exemple pour identifier les numéros de dent correspondants. On peut alors facilement renseigner le descriptif historique en conséquence. En particulier, les numéros des dents des modèles de dent peuvent être affectés aux représentations de ces modèles de dents sur la vue hyperréaliste. Avantageusement, une fois que le modèle historique et sa description ont été créés, il est ainsi possible de générer des enregistrements historiques par ordinateur, sans intervention humaine. La création du descriptif historique peut donc être, au moins partiellement, automatisée. Le risque d'erreur en est avantageusement limité.

En outre, un procédé d'enrichissement selon l'invention permet avantageusement, en modifiant la vue d'un même modèle, de générer un grand nombre d'enregistrements historiques. De préférence, le procédé d'enrichissement comporte ainsi, après l'étape 4), l'étape suivante :
5) modification de la vue hyperréaliste, puis reprise à l'étape 3).

Dans un mode de réalisation préféré, le procédé d'enrichissement comporte, après l'étape 4) ou l'étape 5) optionnelle, l'étape suivante 6) :
6) déformation du modèle historique, puis reprise à l'étape 1).

L'étape 6) est particulièrement avantageuse. Elle permet en effet de créer différents modèles historiques qui ne sont pas exclusivement issus de mesures sur un patient, et en particulier d'un scan de l'arcade dentaire du patient. Les modèles historiques peuvent être en particulier créés pour simuler des situations dentaires pour lesquelles peu de photos sont disponibles, par exemple relatives à des pathologies rares.

L'invention concerne donc également un procédé d'analyse d'une photo « d'analyse » représentant une arcade dentaire d'un patient « d'analyse », selon la revendication 12.

Lorsque la base d'apprentissage historique contient des enregistrements historiques relatifs à une pathologie particulière, le réseau de neurones d'analyse permet ainsi avantageusement d'évaluer si la scène dentaire représentée sur la photo d'analyse correspond à cette pathologie.

Un procédé de transformation, ne faisant pas partie de l'invention revendiquée, d'une vue « d'origine » d'un modèle tridimensionnel numérique « d'origine », en particulier d'un modèle d'une arcade dentaire, en une vue hyperréaliste, est divuglué, ledit procédé comportant les étapes suivantes :
21) création d'une base d'apprentissage « de transformation » constituée de plus de 1 000 enregistrements « de transformation », chaque enregistrement de transformation comportant :
   - une photo « de transformation » représentant une scène, et
   - une vue d'un modèle tridimensionnel numérique « de transformation » modélisant ladite scène, ou « vue de transformation », la vue de transformation représentant ladite scène comme la photo de transformation ;
22) entraînement d'au moins un réseau de neurones « de transformation », au moyen de la base d'apprentissage de transformation ;
23) soumission de la vue d'origine audit au moins un réseau de neurones de transformation entrainé, de manière qu'il détermine ladite vue hyperréaliste.

Comme on le verra plus en détail dans la suite de la description, un procédé de transformation se fonde sur un réseau de neurones entrainé pour être capable de rendre hyperréaliste une vue d'un modèle. L'utilisation du procédé permet ainsi, avantageusement, de créer une bibliothèque de vues hyperréalistes, apportant sensiblement les mêmes informations que des photos, sans avoir à prendre de photos.

Le procédé de transformation peut être en particulier utilisé pour créer une vue hyperréaliste du modèle historique à partir d'une vue d'origine du modèle historique, afin d'enrichir une base d'apprentissage historique conformément à un procédé d'enrichissement selon l'invention.

De préférence, à l'étape 23), la vue d'origine est traitée au moyen d'un moteur 3D avant d'être soumise au réseau de neurones de transformation. Le résultat obtenu en est encore amélioré.

Dans un mode de réalisation, le procédé comporte une étape supplémentaire suivante :
24) association de la vue hyperréaliste à un descriptif historique pour constituer des enregistrements historiques d'une base d'apprentissage historique, c'est-à-dire pour réaliser les étapes 1) à 4).

L'invention concerne encore un procédé de texturation pour rendre hyperréaliste un modèle tridimensionnel numérique « d'origine », ledit procédé comportant les étapes suivantes :
21') création d'une base d'apprentissage « de texturation » constituée de plus de 1 000 enregistrements « de texturation», chaque enregistrement de texturation comportant :
   - un modèle non texturé de manière réaliste représentant une scène, en particulier une arcade dentaire, et une description de ce modèle précisant qu'il est non texturé de manière réaliste, ou
   - un modèle texturé de manière réaliste représentant une scène, en particulier une arcade dentaire, et une description de ce modèle précisant qu'il est texturé de manière réaliste;
22') entraînement d'au moins un réseau de neurones « de texturation », au moyen de la base d'apprentissage de texturation ;
23') soumission du modèle d'origine audit au moins un réseau de neurones de texturation entrainé, de manière qu'il texture le modèle d'origine pour le rendre hyperréaliste.

Comme on le verra plus en détail dans la suite de la description, un tel procédé permet avantageusement de créer des vues hyperréalistes par simple observation du modèle d'origine rendu hyperréaliste.

A cet effet, le procédé comporte encore l'étape suivante :
24') acquisition d'une vue hyperréaliste par observation du modèle d'origine rendu hyperréaliste à l'étape 23').

Les procédés selon l'invention sont au moins en partie, de préférence entièrement mis en œuvre par ordinateur. L'invention concerne donc également :
- un programme d'ordinateur comprenant des instructions de code de programme pour l'exécution d'une ou plusieurs étapes d'un procédé quelconque selon l'invention, lorsque ledit programme est exécuté par un ordinateur,
- un support informatique sur lequel est enregistré un tel programme, par exemple une mémoire ou un CD-ROM.

### Définitions

Un « patient » est une personne pour laquelle un procédé selon l'invention est mis en œuvre, indépendamment du fait que cette personne suive un traitement orthodontique ou non.

Par « professionnel de soins dentaires », on entend toute personne qualifiée pour prodiguer des soins dentaires, ce qui inclut en particulier un orthodontiste et un dentiste.

Une « situation dentaire » définit un ensemble de caractéristiques relatives à une arcade d'un patient à un instant, par exemple la position des dents, leur forme, la position d'un appareil orthodontique, etc. à cet instant.

Par « modèle », on entend un modèle tridimensionnel numérique. Il est constitué d'un ensemble de voxels. Un « modèle d'une arcade » est un modèle représentant au moins une partie d'une arcade dentaire, de préférence au moins 2, de préférence au moins 3, de préférence au moins 4 dents.

Dans un souci de clarté, on distingue le « découpage » d'un modèle en « modèles élémentaires » et la « segmentation » d'une image, en particulier d'une photo, en « zones élémentaires ». Les modèles élémentaires et les zones élémentaires sont des représentations, en 3D ou en 2D respectivement, d'un élément d'une scène réelle, par exemple d'une dent.

Une observation d'un modèle, dans des conditions d'observations déterminées, en particulier selon un angle et à une distance déterminés, est appelée une « vue ».

Une « image » est une représentation, en deux dimensions et formée de pixels, d'une scène. Une « photo » est donc une image particulière, classiquement en couleur, prise avec un appareil photo. Par « appareil photo », on entend tout appareil permettant de prendre une photo, ce qui inclut une caméra, un téléphone mobile, une tablette ou un ordinateur. Une vue est un autre exemple d'image.

Un attribut de dent est un attribut dont la valeur est spécifique aux dents. De préférence, une valeur d'un attribut de dent est affectée à chaque zone de dent de la vue considérée ou à chaque modèle de dent d'un modèle d'arcade dentaire considéré. En particulier, un attribut de dent ne concerne pas la vue ou le modèle dans son ensemble. Il tient sa valeur du fait de caractéristiques de la dent à laquelle il se réfère.

Une « scène » est constituée par un ensemble d'éléments qui peuvent être observés simultanément. Une « scène dentaire » est une scène comportant au moins une partie d'une arcade dentaire.

Par « photo d'une arcade », « représentation d'une arcade », « scan d'une arcade », « modèle d'une arcade » ou « vue d'une arcade », on entend une photo, une représentation, un scan, un modèle ou une vue de tout ou partie de ladite arcade dentaire.

Les « conditions d'acquisition » d'une photo ou d'une vue précisent la position et l'orientation dans l'espace d'un appareil d'acquisition de cette photo (appareil photo) ou d'un appareil d'acquisition de cette vue relativement à une arcade dentaire du patient (conditions d'acquisition réelles) ou relativement à un modèle de l'arcade dentaire du patient (conditions d'acquisition virtuelles), respectivement. De préférence, les conditions d'acquisition précisent également la calibration de l'appareil d'acquisition. Des conditions d'acquisition sont dites "virtuelles" lorsqu'elles correspondent à une simulation dans laquelle l'appareil d'acquisition serait dans lesdites conditions d'acquisition (positionnement et de préférence calibration théoriques de l'appareil d'acquisition) par rapport à un modèle.

Dans des conditions d'acquisition virtuelles d'une vue, l'appareil d'acquisition peut être également qualifié de « virtuel ». La vue est en effet acquise par un appareil d'acquisition fictif, ayant les caractéristiques d'un appareil photo « réel » qui aurait servi à acquérir une photo superposable à la vue.

La « calibration » d'un appareil d'acquisition est constituée par l'ensemble des valeurs des paramètres de calibration. Un "paramètre de calibration" est un paramètre intrinsèque à l'appareil d'acquisition (à la différence de sa position et de son orientation) dont la valeur influence la photo ou la vue acquise. De préférence, les paramètres de calibration sont choisis dans le groupe formé par l'ouverture de diaphragme, le temps d'exposition, la distance focale et la sensibilité.

Une "information discriminante" est une information caractéristique qui peut être extraite d'une image (*"image feature*"), classiquement par un traitement informatique de cette image.

Une information discriminante peut présenter un nombre variable de valeurs. Par exemple, une information de contour peut être égale à 1 ou 0 selon qu'un pixel appartient ou non à un contour. Une information de brillance peut prendre un grand nombre de valeurs. Le traitement de l'image permet d'extraire et de quantifier l'information discriminante.

L'information discriminante peut être représentée sous la forme d'une « carte ». Une carte est ainsi le résultat d'un traitement d'une image afin de faire apparaître l'information discriminante, par exemple le contour des dents et des gencives.

On appelle « concordance » *(« match »* ou *« fit » en* anglais) entre deux objets une mesure de la différence entre ces deux objets. Une concordance est maximale (« *best fit »*) lorsqu'elle résulte d'une optimisation permettant de manière à minimiser ladite différence.

Une photo et une vue qui présentent une concordance maximale représentent sensiblement une scène de la même façon. En particulier, dans une scène dentaire, les représentations des dents sur la photo et la vue sont sensiblement superposables.

La recherche d'une vue présentant une concordance maximale avec une photo s'effectue en recherchant les conditions d'acquisition virtuelles de la vue présentant une concordance maximale avec les conditions d'acquisition réelles de la photo.

La comparaison de la photo et la vue résulte de préférence de la comparaison de deux cartes correspondantes. On appelle classiquement « distance » une mesure de la différence entre les deux cartes ou entre la photo et la vue.

Une « base d'apprentissage » est une base d'enregistrements informatiques adaptée à l'entrainement d'un réseau de neurones.

L'entrainement d'un réseau de neurones est adapté au but poursuivi et ne pose pas de difficulté particulière à l'homme de l'art.

L'entrainement d'un réseau de neurones consiste à le confronter à une base d'apprentissage contenant des informations sur les deux types d'objet que le réseau de neurones doit apprendre à faire « correspondre », c'est-à-dire à connecter l'un à l'autre.

L'entrainement peut se faire à partir d'une base d'apprentissage « pairée » ou « avec paires », constituée d'enregistrements « de paires », c'est-à-dire comportant chacun un premier objet d'un premier type pour l'entrée du réseau de neurones, et un deuxième objet correspondant, d'un deuxième type, pour la sortie du réseau de neurones. On dit aussi que l'entrée et la sortie du réseau de neurones sont « pairées ». L'entrainement du réseau de neurones avec toutes ces paires lui apprend à fournir, à partir d'un objet quelconque du premier type, un objet correspondant du deuxième type.

Par exemple, pour qu'un réseau de neurones de transformation puisse transformer une vue d'origine en une vue hyperréaliste, au moyen de la base d'apprentissage de transformation, on l'entraine pour qu'il fournisse, en sortie, sensiblement la photo de transformation lorsqu'on lui présente en entrée la vue de transformation correspondante. Autrement dit, on fournit au réseau de neurones de transformation l'ensemble des enregistrements de transformation, c'est-à-dire des paires contenant à chaque fois une vue de transformation (vue d'un modèle d'une arcade dentaire (premier objet du premier type)) et une photo de transformation correspondante (photo de la même arcade dentaire, observée comme le modèle de l'arcade est observé pour obtenir la vue (deuxième objet du deuxième type)), de manière qu'il détermine les valeurs de ses paramètres afin que, lorsqu'on lui présente, en entrée, une vue de transformation, il la transforme en une vue hyperréaliste sensiblement identique à la une photo correspondante (si elle avait été prise).

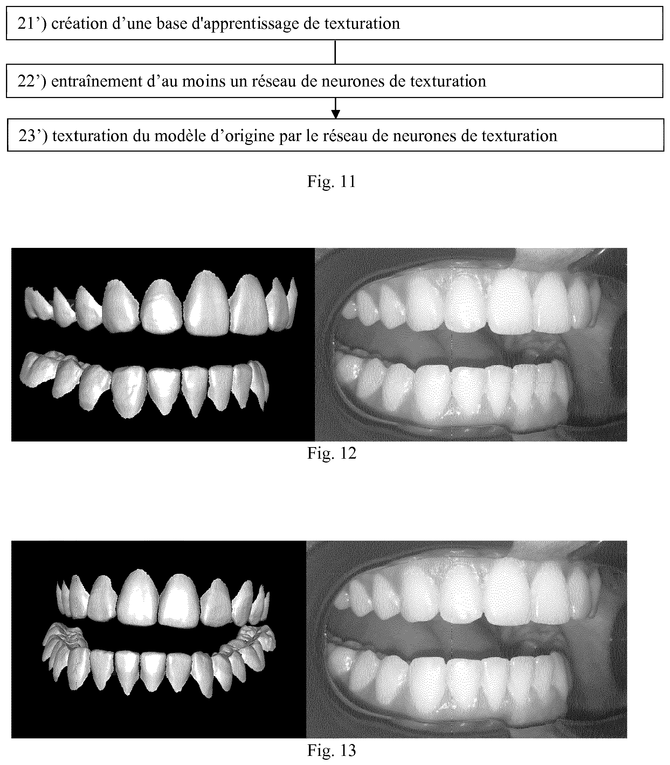

La figure 12 illustre un exemple d'enregistrement de transformation.

Classiquement, on dit que cet entrainement s'effectue en fournissant, au réseau de neurones de transformation, les vues de transformation en entrée, et les photos de transformation en sortie.

De manière similaire, le réseau de neurones d'analyse est entrainé au moyen de la base d'apprentissage d'analyse en lui fournissant les enregistrements historiques de manière qu'il détermine les valeurs de ses paramètres afin que lorsqu'on lui présente, en entrée, une vue hyperréaliste, il fournisse un descriptif sensiblement identique au descriptif historique correspondant à la vue hyperréaliste.

Classiquement, on dit que cet entrainement s'effectue en fournissant, au réseau de neurones d'analyse, les vues hyperréalistes en entrée et les descriptifs historiques en sortie.

L'article « Image-to-Image Translation with Conditional Adversarial Networks » de Phillip Isola Jun-Yan Zhu, Tinghui Zhou, Alexei A. Efros, Berkeley AI Research (BAIR) Laboratory, UC Berkeley, illustre l'utilisation d'une base d'apprentissage pairée.

Un entrainement à partir d'une base d'apprentissage pairée est préféré.

Alternativement, l'entrainement peut se faire à partir d'une base d'apprentissage dite « non pairée », ou « sans paires ». Une telle base d'apprentissage est constituée :
- d'un ensemble « de sortie » constitué de premiers objets d'un premier type, et
- d'un ensemble d'entrée constitué de deuxièmes objets d'un deuxième type,
les deuxièmes objets ne correspondant pas nécessairement aux premiers objets, c'est-à-dire étant indépendants des premiers objets.

Les ensembles d'entrée et de sortie sont fournies en entrée et en sortie du réseau de neurones pour l'entrainer. Cet entrainement du réseau de neurones lui apprend à fournir, à partir d'un objet quelconque du premier type, un objet correspondant du deuxième type.

De telles techniques d'entrainement « sans paires » sont par exemple décrites dans l'article de Zhu, Jun-Yan, et al. "Unpaired image-to-image translation using cycle-consistent adversarial networks*. "*

La figure 13 illustre un exemple d'une vue d'un modèle 3D d'un ensemble d'entrée d'une base d'apprentissage non pairée et une photo d'un ensemble de sortie de cette base d'apprentissage. La photo ne correspond pas à la vue, notamment parce que l'arcade n'est pas observée de la même façon et/ou parce que l'arcade observée n'est pas la même.

Par exemple, l'ensemble d'entrée peut comporter des modèles non texturés de manière réaliste représentant chacun une arcade dentaire (premiers objets) et l'ensemble de sortie peut comporter des modèles texturés de manière réaliste représentant chacun une arcade dentaire (deuxièmes objets). Même si les arcades représentées dans l'ensemble d'entrée sont différentes de celles représentées dans l'ensemble de sortie, les techniques d'entrainement « sans paires » permettent au réseau de neurones d'apprendre à déterminer, pour un objet du premier type (modèle non texturé), un objet du deuxième type correspondant (modèle texturé).

Bien entendu, la qualité de l'apprentissage dépend du nombre des enregistrements dans les ensembles d'entrée et de sortie. De préférence, le nombre d'enregistrements dans l'ensemble d'entrée, est sensiblement identique au nombre d'enregistrements dans l'ensemble de sortie.

Selon l'invention, une base d'apprentissage non pairée comporte de préférence des ensembles d'entrée et de sortie comportant chacun plus de 1 000, plus de 5 000, de préférence plus de 10 000, de préférence plus de 30 000, de préférence plus de 50 000, de préférence plus de 100 000 premiers objets et deuxièmes objets, respectivement.

La nature des objets n'est pas limitative. Un objet peut être par exemple une image ou un ensemble d'informations sur cet objet, ou « descriptif ». Un descriptif comporte des valeurs pour des attributs d'un autre objet. Par exemple, un attribut d'une image d'une scène dentaire peut servir à identifier les numéros des dents représentées. L'attribut est alors « numéro de dent » et pour chaque dent, la valeur de cet attribut est le numéro de cette dent.

Dans la présente description, les qualificatifs « historique », « d'origine », « de transformation » et « d'analyse » sont utilisés à des fins de clarté.

Il faut interpréter "comprenant " ou "comportant " ou "présentant " de manière non restrictive, sauf indication contraire.

### Brève description des figures

D'autres caractéristiques et avantages de l'invention apparaîtront encore à la lecture de la description détaillée qui va suivre et à l'examen du dessin annexé dans lequel :

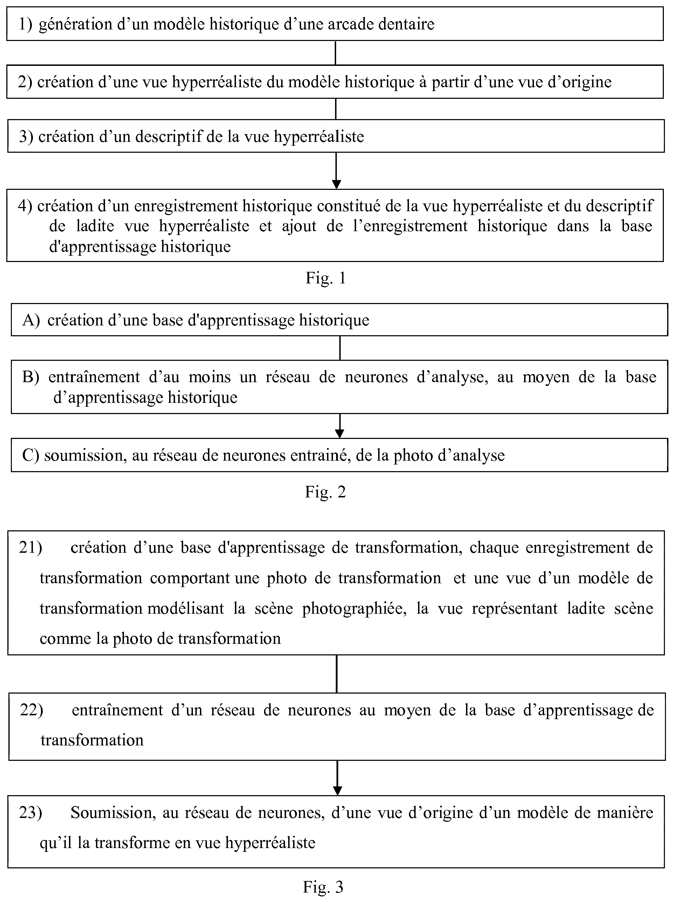

- les figures 1 à 3 et 11 représentent, schématiquement, les différentes étapes de procédés d'enrichissement, d'analyse, de transformation et de texturation, selon l'invention, respectivement ;
- la figure 4 représente un exemple d'un modèle d'une arcade dentaire ;
- la figure 5 représente un exemple d'une vue d'origine du modèle de la figure 4 ;
- la figure 6 représente un exemple d'une vue hyperréaliste obtenue à partir de la vue d'origine de la figure 5 ;
- la figure 7 représente un exemple de photo de transformation d'une arcade dentaire ;
- la figure 8 représente un exemple de vue de transformation correspondant à la photo de transformation de la figure 7 ;
- la figure 9 représente un exemple d'une carte de transformation relative au contour des dents obtenue à partir d'une photo de transformation ;
- les figures 10a et 10b représentent une vue d'origine d'un modèle historique et une vue hyperréaliste correspondante, dont le descriptif a hérité de la description du modèle historique, respectivement ;
- la figure 12 représente un enregistrement d'une base d'apprentissage « pairée », l'image de gauche représentant une vue de transformation d'un modèle d'une arcade dentaire, à fournir en entrée du réseau de neurones, et l'image de droite représentant une photo de transformation correspondante, à fournir en sortie du réseau de neurones ;
- la figure 13 illustre un exemple d'une vue d'un modèle d'un ensemble d'entrée d'une base d'apprentissage non pairée et une photo d'un ensemble de sortie de cette base d'apprentissage.

### Description détaillée

La description détaillée qui suit est celle de modes de réalisation préférés, mais n'est pas limitative.

### Création de la base d'apprentissage historique

Un procédé d'enrichissement d'une base d'apprentissage historique selon l'invention comporte les étapes 1) à 3).

**A l'étape 1),** on génère un modèle historique d'une arcade dentaire d'un patient dit « historique ».

Le modèle historique peut être préparé à partir de mesures effectuées sur les dents du patient historique ou sur un moulage de ses dents, par exemple un moulage en plâtre.

Le modèle historique est de préférence obtenu à partir d'une situation réelle, de préférence créé avec un scanner 3D. Un tel modèle, dit « 3D », peut être observé selon un angle quelconque.

Dans un mode de réalisation, le modèle historique est théorique, c'est-à-dire ne correspond pas à une situation réelle. En particulier, le modèle historique peut être créé par assemblage d'un ensemble de modèles de dents choisis dans une bibliothèque numérique. L'agencement des modèles de dent est déterminé pour que le modèle historique soit réaliste, c'est-à-dire corresponde à une situation qui aurait pu se rencontrer chez un patient. En particulier, les modèles de dents sont disposés suivant un arc, en fonction de leur nature, et orientés de manière réaliste. L'utilisation d'un modèle historique théorique permet avantageusement de simuler des arcades dentaires présentant des caractéristiques rares.

De préférence, on génère également une description du modèle historique.

La « description » d'un modèle est constituée d'un ensemble de données relatives au modèle dans son ensemble ou à des parties du modèle, par exemple aux parties du modèle qui modélisent des dents.

De préférence, on découpe le modèle historique. En particulier, de préférence, pour chaque dent, on définit, à partir du modèle historique, un modèle de ladite dent, ou « modèle de dent ».

Dans le modèle historique, un modèle de dent est de préférence délimité par un bord gingival qui peut être décomposé en un bord gingival intérieur (du côté de l'intérieur de la bouche par rapport à la dent), un bord gingival extérieur (orienté vers l'extérieur de la bouche par rapport à la dent) et deux bords gingivaux latéraux.

Un ou plusieurs attributs de dent sont associés aux modèles de dent en fonction des dents qu'ils modélisent.

Un attribut de dent est de préférence un attribut qui ne concerne que la dent modélisée par le modèle de dent.

L'attribut de dent est de préférence choisi parmi un numéro de dent, un type de dent, un paramètre de forme de la dent, par exemple une largeur de dent, en particulier une largeur mésio-palatine, une épaisseur, une hauteur de couronne, un indice de déflexion en mésial et distal du bord incisif, ou un niveau d'abrasion, un paramètre d'apparence de la dent, en particulier un indice sur la présence de tartre, d'une plaque dentaire ou de nourriture sur la dent, un indice de translucidité ou un paramètre de couleur, ou un paramètre relatif à l'état de la dent, par exemple « abrasée », « cassée », « cariée » ou « appareillée » (c'est-à-dire en contact avec un appareil dentaire, par exemple orthodontique), ou un paramètre relatif à une pathologie associée à la dent, par exemple relatif à la présence, dans la région de la dent, d'une gengivite, d'une MIH (Hypominéralisation Molaires-Incisives), d'une AIH (Hépatite Auto Immune), d'une fluorose ou d'une nécrose .

Une valeur d'attribut de dent peut être affectée à chaque attribut de dent d'un modèle de dent particulier.

Par exemple, l'attribut de dent « type de dent » aura la valeur « incisive », « canine » ou « molaire » selon que le modèle de dent est celui d'une incisive, d'une canine ou d'une molaire, respectivement.

L'attribut de dent « situation pathologique » aura la valeur « dent saine », « dent cassée », « dent usée », « dent fêlée », « dent réparée », « dent tatouée » ou « dent cariée », par exemple.

L'affectation des valeurs d'attribut de dent aux modèles de dent peut être manuelle ou, au moins en partie, automatique.

De même, les numéros de dent sont classiquement attribués selon une règle standard. Il suffit donc de connaître cette règle et le numéro d'une dent modélisée par un modèle de dent pour calculer les numéros des autres modèles de dent.

Dans un mode de réalisation préféré, la forme d'un modèle de dent particulier est analysée de manière à définir sa valeur d'attribut de dent, par exemple son numéro. Cette reconnaissance de forme peut être réalisée manuellement. Elle est de préférence réalisée au moyen d'un réseau de neurones.

La définition des modèles de dent et les valeurs d'attribut de dent qui leur sont associées font partie de la description du modèle historique.

De manière similaire, on peut définir, à partir du modèle historique, d'autres modèles élémentaires que les modèles de dent, et notamment des modèles pour la langue, et/ou la bouche, et/ou les lèvres, et/ou les mâchoires, et/ou la gencive, et/ou un appareil dentaire, de préférence orthodontique, et leur affecter des valeurs pour des attributs de langue, et/ou de la bouche, et/ou de lèvres, et/ou de mâchoires, et/ou de gencive, et/ou d'appareil dentaire, respectivement.

Un attribut de langue peut être, par exemple, relatif à la position de la langue (par exemple prendre la valeur « en retrait »).

Un attribut de bouche peut être, par exemple, relatif à l'ouverture de la bouche du patient (par exemple prendre la valeur « bouche ouverte » ou « bouche fermée »).

Un attribut d'appareil orthodontique peut être, par exemple, relatif à la présence d'un appareil dentaire et/ou relatif à son état (par exemple prendre la valeur « appareil intact », « appareil cassé » ou « appareil endommagé »).

La description du modèle historique peut également comprendre des données relatives au modèle dans son ensemble, c'est-à-dire des valeurs pour des « attributs de modèle ».

Par exemple, un attribut de modèle peut définir si la situation dentaire illustrée par le modèle historique « est pathologique » ou « n'est pas pathologique », sans qu'un examen de chaque dent soit effectué. Un attribut de modèle définit de préférence la ou les pathologies dont souffre le patient historique au moment où le modèle historique a été réalisé.

Un attribut de modèle peut également définir une classe d'occlusion, une position de la mandibule par rapport au maxillaire (« overbyte » ou « overjet »), un indice d'hygiène globale ou un indice d'encombrement, par exemple.

### Transformation en vue hyperréaliste

**A l'étape 2),** on crée une vue hyperréaliste dudit modèle historique, c'est-à-dire une vue qui semble être une photo.

De préférence, on choisit une vue « d'origine » du modèle historique, puis on la rend hyperréaliste. La vue d'origine est de préférence une vue extra-orale, par exemple une vue correspondant à une photo qui aurait été prise face au patient, de préférence avec un écarteur.

On utilise un réseau de neurones dit « de transformation » entrainé pour rendre hyperréalistes des vues d'origine, et comportant les étapes 21') à 23') ci-après, tandis que l'usage des étapes 21) à 23) dans le procédé d'enrichissement d'une base d'apprentissage historique ne fait pas partie de l'invention telle que revendiquée.

Des techniques de transformation d'images sont décrites dans l'article de Zhu, Jun-Yan, et al. "Unpaired image-to-image translation using cycle-consistent adversarial networks. *"* Cet article ne décrit cependant pas la transformation d'une vue d'un modèle.

**A l'étape 21),** on crée donc une base d'apprentissage dite « de transformation » constituée de plus de 1 000 enregistrements dits « de transformation », chaque enregistrement de transformation comportant :
- une photo « de transformation » représentant une scène dentaire, et
- une vue d'un modèle tridimensionnel numérique « de transformation » modélisant ladite scène, ou « vue de transformation », la vue de transformation représentant ladite scène comme la photo de transformation.

La vue de transformation représente la scène comme la photo de transformation lorsque les représentations de cette scène sur la vue de transformation et sur la photo de transformation sont sensiblement les mêmes.

La base d'apprentissage de transformation comporte de préférence plus de 5 000, de préférence plus de 10 000, de préférence plus de 30 000, de préférence plus de 50 000, de préférence plus de 100 000 enregistrements de transformation. Plus le nombre d'enregistrements de transformation est élevé, meilleure est la capacité du réseau de neurones de transformation à transformer une vue d'origine en une vue hyperréaliste.

De préférence, un enregistrement de transformation est réalisé, pour un patient « de transformation », de la manière suivante :
211) réalisation d'un modèle d'une arcade dentaire du patient de transformation, ou « modèle de transformation » ;
212) acquisition d'une photo de transformation représentant ladite arcade, de préférence au moyen d'un téléphone mobile, dans des conditions d'acquisition réelles ;
213) recherche de conditions d'acquisition virtuelles adaptées pour une acquisition d'une vue « de transformation » du modèle de transformation présentant une concordance maximale avec la photo de transformation dans lesdites conditions d'acquisition virtuelles, et acquisition de ladite vue de transformation ;
214) association de la photo de transformation et de la vue de transformation pour former l'enregistrement de transformation.

L'étape 213) peut être en particulier réalisée comme décrit dans WO 2016/066651.

De préférence, on traite la photo de transformation pour réaliser au moins une carte « de transformation » représentant, au moins partiellement, une information discriminante. La carte de transformation représente donc l'information discriminante dans le référentiel de la photo de transformation.

L'information discriminante est de préférence choisie dans le groupe constitué par une information de contour, une information de couleur, une information de densité, une information de distance, une information de brillance, une information de saturation, une information sur les reflets et des combinaisons de ces informations.

L'homme de l'art sait comment traiter une photo de transformation pour faire apparaître l'information discriminante.

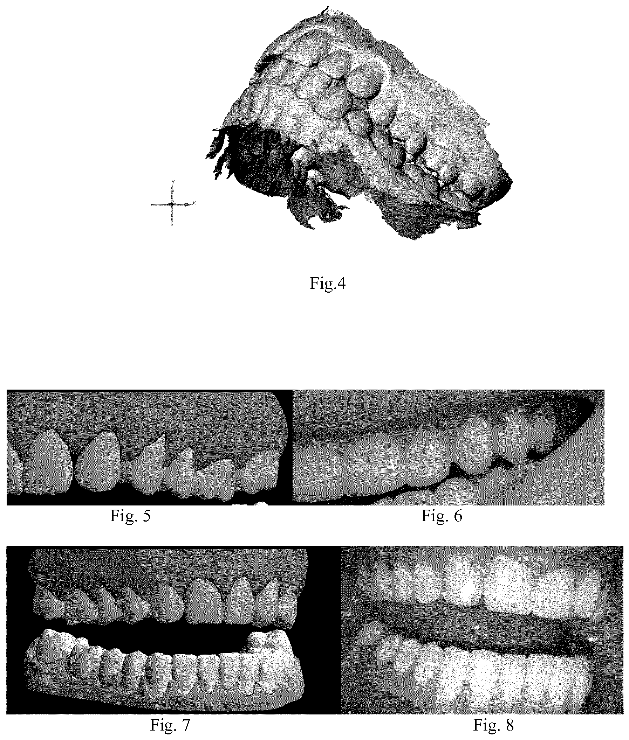

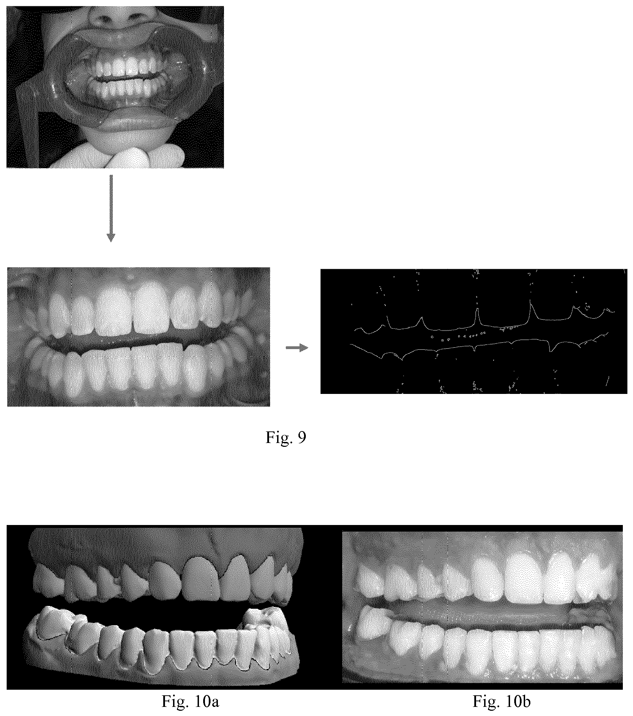

Par exemple, la figure 9 est une carte de transformation relative au contour des dents obtenue à partir de la photo de transformation de la figure 7.

Ladite recherche comporte ensuite les étapes suivantes :
i) détermination de conditions d'acquisition virtuelles « à tester » ;
ii) réalisation d'une vue de référence du modèle de transformation dans lesdites conditions d'acquisition virtuelles à tester ;
iii) traitement de la vue de référence pour réaliser au moins une carte de référence représentant, au moins partiellement, l'information discriminante ;
iv) comparaison des cartes de transformation et de référence de manière à déterminer une valeur pour une fonction d'évaluation, ladite valeur pour la fonction d'évaluation dépendant des différences entre lesdites cartes de transformation et de référence et correspondant à une décision de poursuivre ou de stopper la recherche de conditions d'acquisition virtuelles approximant lesdites conditions d'acquisition réelles avec plus d'exactitude que lesdites conditions d'acquisition virtuelles à tester déterminées à la dernière occurrence de l'étape i) ;
v) si ladite valeur pour la fonction d'évaluation correspond à une décision de poursuivre ladite recherche, modification des conditions d'acquisition virtuelles à tester, puis reprise à l'étape ii).

A l'étape i), on commence par déterminer des conditions d'acquisition virtuelles à tester, c'est-à-dire une position et une orientation virtuelles susceptibles de correspondre à la position et l'orientation réelles de l'appareil photo lors de la capture de la photo de transformation, mais aussi, de préférence, une calibration virtuelle susceptible de correspondre à la calibration réelle de l'appareil photo lors de la capture de la photo de transformation.

A l'étape ii), on configure ensuite virtuellement l'appareil photo dans les conditions d'acquisition virtuelles à tester afin d'acquérir une vue de référence du modèle de transformation dans ces conditions d'acquisition virtuelles à tester. La vue de référence correspond donc à la photo qu'aurait prise l'appareil photo s'il avait été disposé, par rapport au modèle de transformation, et optionnellement calibré, dans les conditions d'acquisition virtuelles à tester.

A l'étape iii), on traite la vue de référence, comme la photo de transformation, de manière à réaliser, à partir de la vue de référence, une carte de référence représentant l'information discriminante.

A l'étape iv), pour comparer la photo de transformation et la vue de référence, on compare leurs informations discriminantes respectives sur les cartes de transformation et de référence. En particulier, on évalue la différence ou « distance » entre ces deux cartes au moyen d'un score. Par exemple, si l'information discriminante est le contour des dents, on peut comparer la distance moyenne entre les points du contour des dents qui apparait sur la carte de référence et les points du contour correspondant qui apparaît sur la carte de transformation, le score étant d'autant plus élevé que cette distance est faible.

Le score peut être par exemple un coefficient de corrélation.

Le score est ensuite évalué au moyen d'une fonction d'évaluation. La fonction d'évaluation permet de décider si le cyclage sur les étapes i) à v) doit être poursuivi ou stoppé. A l'étape v), si la valeur de la fonction d'évaluation indique qu'il est décidé de poursuivre le cyclage, on modifie les conditions d'acquisition virtuelles à tester et on recommence le cyclage sur les étapes i) à v) consistant à réaliser une vue de référence et une carte de référence, à comparer la carte de référence avec la carte de transformation pour déterminer un score, puis à prendre une décision en fonction de ce score.

La modification des conditions d'acquisition virtuelles à tester correspond à un déplacement virtuel dans l'espace et/ou à une modification de l'orientation et/ou, de préférence, à une modification de la calibration de l'appareil photo. La modification est de préférence guidée par des règles heuristiques, par exemple en favorisant les modifications qui, d'après une analyse des précédents scores obtenus, apparaissent les plus favorables pour augmenter le score.

Le cyclage est poursuivi jusqu'à ce que la valeur de la fonction d'évaluation indique qu'il est décidé de cesser ce cyclage, par exemple si le score atteint ou dépasse un seuil.

L'optimisation des conditions d'acquisition virtuelles est de préférence effectuée en utilisant une méthode métaheuristique, de préférence évolutionniste, de préférence un algorithme de recuit simulé. Une telle méthode est bien connue pour l'optimisation non linéaire.

Elle est de préférence choisie dans le groupe formé par
- les algorithmes évolutionnistes, de préférence choisie parmi: les stratégies d'évolution, les algorithmes génétiques, les algorithmes à évolution différentielle, les algorithmes à estimation de distribution, les systèmes immunitaires artificiels, la recomposition de chemin Shuffled Complex Evolution, le recuit simulé, les algorithmes de colonies de fourmis, les algorithmes d'optimisation par essaims particulaires, la recherche avec tabous, et la méthode GRASP ;
- l'algorithme du kangourou,
- la méthode de Fletcher et Powell,
- la méthode du bruitage,
- la tunnelisation stochastique,
- l'escalade de collines à recommencements aléatoires,
- la méthode de l'entropie croisée, et
- les méthodes hybrides entre les méthodes métaheuristiques citées ci-dessus.

Si on a quitté le cyclage, sans qu'un score satisfaisant ait pu être obtenu, par exemple sans que le score ait pu atteindre ledit seuil, le procédé peut être arrêté (situation d'échec) ou repris avec une nouvelle information discriminante. Le procédé peut être également poursuivi avec les conditions d'acquisition virtuelles correspondant au meilleur score atteint. Si on a quitté le cyclage alors qu'un score satisfaisant a pu être obtenu, par exemple parce que le score a atteint, voire dépassé ledit seuil, les conditions d'acquisition virtuelles correspondent sensiblement aux conditions d'acquisition réelles de la photo de transformation et la vue de référence est en concordance maximale avec la photo de transformation. Les représentations de la scène dentaire sur la vue de référence et sur la photo de transformation sont sensiblement superposables.

La vue de référence, représentant ladite scène dentaire comme la photo de transformation, est alors choisie comme vue de transformation.

**A l'étape 22),** on entraine le réseau de neurones de transformation au moyen de la base d'apprentissage de transformation. Un tel entrainement est bien connu de l'homme de l'art. Il consiste classiquement à fournir l'ensemble desdites vues de transformation en entrée du réseau de neurones de transformation et l'ensemble desdites photos de transformation en sortie du réseau de neurones de transformation.

Par cet entrainement, le réseau de neurones de transformation apprend comment transformer une vue quelconque d'un modèle en une vue hyperréaliste.

**A l'étape 23),** on soumet, au réseau de neurones de transformation, une vue d'origine du modèle historique. Le réseau de neurones de transformation transforme la vue d'origine en vue hyperréaliste.

L'étape 2) comprend les étapes suivantes, d'abord pour rendre hyperréaliste le modèle historique, puis pour en extraire une vue hyperréaliste :
21') création d'une base d'apprentissage « de texturation » constituée de plus de 1 000 enregistrements « de texturation», chaque enregistrement de texturation comportant :
   - un modèle non texturé de manière réaliste représentant une arcade dentaire, par exemple un scan d'une arcade dentaire, et une description dudit modèle précisant qu'il est non texturé de manière réaliste, ou
   - un modèle texturé de manière réaliste représentant une arcade dentaire, par exemple un scan d'une arcade dentaire rendu hyperréaliste, et une description dudit modèle précisant qu'il est texturé de manière réaliste ;
22') entraînement d'au moins un réseau de neurones « de texturation », au moyen de la base d'apprentissage de texturation ;
23') soumission du modèle historique audit au moins un réseau de neurones de texturation entrainé, de manière qu'il texture le modèle historique pour le rendre hyperréaliste.

Une vue hyperréaliste peut alors être obtenue directement par observation dudit modèle historique hyperréaliste.

Par « texturer », on entend transformer un modèle pour lui donner une apparence hyperréaliste, semblable à celle que pourrait observer un observateur de l'arcade dentaire réelle. Autrement dit, un observateur d'un modèle texturé de manière hyperréaliste a l'impression d'observer l'arcade dentaire elle-même.

**A l'étape 21'),** les modèles non texturés de manière réaliste peuvent être générés comme décrit ci-dessus pour la génération des modèles historiques.

Les modèles texturés de manière réaliste peuvent être générés en texturant des modèles initialement non texturés de manière réaliste. De préférence, on met en œuvre un procédé de génération d'un modèle hyperréaliste comportant les étapes A") à C''), dans lesquelles le modèle d'origine est un modèle initialement non texturé de manière réaliste.

**A l'étape 22'),** l'entrainement peut en particulier être effectué en suivant les enseignements de l'article de Zhu, Jun-Yan, et al. "Unpaired image-to-image translation using cycle-consistent adversarial networks " (Open access Computer Vision Foundation).

Par cet entrainement, le réseau de neurones de texturation apprend à texturer un modèle pour le rendre hyperréaliste. En particulier, il apprend à texturer des modèles d'arcade dentaire. A l'étape 2), une vue hyperréaliste d'un modèle 3D peut être également obtenue par traitement de l'image d'origine au moyen d'un moteur 3D conventionnel.

Un moteur 3D est un composant logiciel permettant de simuler sur un objet tridimensionnel numérique les effets de l'environnement, et notamment les effets d'éclairage, les effets d'optique, les effets physiques et les effets mécaniques sur l'objet réel correspondant.

Autrement dit, le moteur 3D simule, sur l'objet tridimensionnel numérique, les phénomènes physiques à l'origine de ces effets dans le monde réel.

Par exemple, un moteur 3D va calculer, en fonction de la position relative d'une source de lumière « virtuelle » par rapport à un objet tridimensionnel numérique et de la nature de la lumière projetée par cette source lumineuse, l'apparence de cet objet, par exemple pour faire apparaître des ombres ou des reflets. L'apparence de l'objet tridimensionnel numérique simule ainsi l'apparence de l'objet réel correspondant lorsqu'il est éclairé comme l'objet tridimensionnel numérique.

Un moteur 3D est encore appelé moteur de rendu 3D, moteur graphique, moteur de jeu, moteur physique, ou modélisateur 3D. Un tel moteur peut être en particulier choisi parmi les moteurs suivants, ou leurs variantes :
- Arnold
- Aqsis
- Arion Render
- Artlantis
- Atomontage
- Blender
- Brazil r/s
- BusyRay
- Cycles
- FinalRender
- Fryrender
- Guerilla Render
- Indigo
- Iray
- Kerkythea
- KeyShot
- Kray
- Lightscape
- LightWorks
- Lumiscaphe
- LuxRender
- Maxwell Render
- Mental Ray
- Nova
- Octane
- Povray
- RenderMan
- Redsdk, Redway3d
- Sunflow
- Turtle
- V-Ray
- VIRTUALIGHT
- YafaRay.

Dans un mode de réalisation particulièrement avantageux, la vue d'origine est d'abord traitée au moyen d'un moteur 3D, puis soumise au réseau de neurones de transformation, comme décrit ci-dessus (étape 23)). La combinaison de ces deux techniques a permis d'obtenir des résultats remarquables.

Dans un mode de réalisation, la vue d'origine peut être d'abord soumise au réseau de neurones de transformation, puis être traitée au moyen d'un moteur 3D. Ce mode de réalisation n'est cependant pas préféré.

Dans un mode de réalisation, une vue hyperréaliste obtenue directement par observation d'un modèle historique hyperréaliste texturé suivant les étapes 21') à 23') est traitée au moyen d'un moteur 3D. Ce traitement supplémentaire améliore également l'aspect réaliste de l'image obtenue.

**A l'étape 3),** on crée un descriptif pour la vue hyperréaliste.

Le descriptif d'une vue hyperréaliste est constitué d'un ensemble de données relatives à ladite vue dans son ensemble ou à des parties de ladite vue, par exemple aux parties de ladite vue qui représentent des dents.

Comme la description du modèle historique, le descriptif d'une vue hyperréaliste peut comporter des valeurs pour des attributs de dents et/ou de la langue, et/ou de la bouche, et/ou de lèvres, et/ou de mâchoires, et/ou de gencive, et/ou d'appareil dentaire représentés sur la vue hyperréaliste. Les attributs mentionnés précédemment pour la description du modèle historique peuvent être des attributs du descriptif de la vue hyperréaliste.

Le descriptif d'une vue hyperréaliste peut également comporter des valeurs pour des attributs de vue, c'est-à-dire relatifs à la vue hyperréaliste ou à la vue d'origine dans son ensemble. Un attribut de vue peut être en particulier relatif à
- une position et/ou une orientation et/ou une calibration d'un appareil photo virtuel utilisé pour acquérir la vue d'origine, et/ou
- une qualité de la vue hyperréaliste, et en particulier relatif à la luminosité, au contraste ou à la netteté de la vue hyperréaliste, et/ou
- au contenu de la vue d'origine ou de la vue hyperréaliste, par exemple relatif à l'agencement des objets représentés, par exemple pour préciser que la langue masque certaines dents, ou relatif à la situation, thérapeutique ou non, du patient.

Le descriptif de la vue hyperréaliste peut être réalisé à la main, au moins partiellement.

De préférence, il est réalisé, au moins partiellement, de préférence complètement, par héritage du modèle historique, de préférence par un programme d'ordinateur.

En particulier, si le modèle historique a été découpé, les conditions d'acquisition virtuelles permettent de connaitre les modèles élémentaires du modèle historique représentés sur la vue hyperréaliste, ainsi que leurs emplacements respectifs. Les valeurs des attributs relatifs aux dits modèles élémentaires, disponibles dans la description du modèle historique, peuvent donc être affectées aux mêmes attributs relatifs aux représentations desdits modèles élémentaires dans la vue hyperréaliste.

Par exemple, si le modèle historique a été découpé pour définir des modèles de dent, et que la description du modèle historique précise, pour un modèle de dent, un numéro, le même numéro peut être affecté à la représentation de ce modèle de dent sur la vue hyperréaliste.

La figure 10a représente une vue d'origine d'un modèle historique qui a été découpé afin de définir des modèles de dent. La description du modèle historique comporte les numéros des dents du modèle historique.

Les valeurs d'au moins une partie des attributs du descriptif d'une vue hyperréaliste peuvent ainsi être héritées de la description du modèle historique.

**A l'étape 4),** on crée un enregistrement historique constitué de la vue hyperréaliste et du descriptif de ladite vue hyperréaliste, et on l'ajoute dans la base d'apprentissage historique.

La base d'apprentissage historique peut n'être constituée que d'enregistrements historiques générés suivant un procédé d'enrichissement selon l'invention. Alternativement, la base d'apprentissage historique peut comporter des enregistrements historiques générés suivant un procédé d'enrichissement selon l'invention et d'autres enregistrements historiques, par exemple créés suivant des procédés conventionnels, notamment par labellisation de photos.

**A l'étape 5),** optionnelle, on modifie la vue hyperréaliste du modèle historique, puis on reprend à l'étape 3).

Pour modifier la vue hyperréaliste, on procède de préférence en créant une nouvelle vue hyperréaliste à partir d'une nouvelle vue d'origine.

En réalisant un cycle d'étapes 3) à 5), il devient donc possible de créer de créer de nombreux enregistrements historiques correspondant à différentes conditions d'observation du modèle historique. Un seul modèle historique permet ainsi de créer de nombreux enregistrements historiques, sans même disposer d'une photo.

**A l'étape 6),** de préférence, on déforme le modèle historique.

La déformation peut notamment consister en
- un déplacement d'un modèle de dent, par exemple pour simuler un écartement entre deux dents,
- une déformation d'un modèle de dent, par exemple pour simuler un bruxisme,
- une suppression d'un modèle de dent,
- une déformation d'un modèle de mâchoire.

Dans un mode de réalisation, la déformation simule une pathologie.

L'étape 6) conduit à un modèle historique théorique qui, avantageusement, permet de facilement simuler des situations dentaires pour lesquelles des mesures ne sont pas disponibles.

On reprend ensuite l'étape 2). A partir d'un modèle historique initial, il est donc possible d'obtenir des enregistrements historiques relatifs à une situation dentaire différente de celle correspondant au modèle historique initial. En particulier, il est possible de créer des enregistrements historiques pour des modèles historiques correspondant à différents stades d'une pathologie rare.

La base d'apprentissage historique comporte de préférence plus de 5 000, de préférence plus de 10 000, de préférence plus de 30 000, de préférence plus de 50 000, de préférence plus de 100 000 enregistrements historiques.

### Analyse d'une photo d'analyse

Pour analyser une photo d'analyse, on procède suivant les étapes A) à C).

Le procédé comporte de préférence une étape préalable pendant laquelle la photo d'analyse est acquise avec un appareil photo, de préférence choisi parmi un téléphone mobile, un appareil photo dit « connecté », une montre dite « intelligente », ou « smartwatch », une tablette ou un ordinateur personnel, fixe ou portable, comportant un système d'acquisition de photos. De préférence l'appareil photo est un téléphone mobile.

De préférence encore, lors de l'acquisition de la photo d'analyse, l'appareil photo est écarté de l'arcade dentaire de plus de 5 cm, plus de 8 cm, voire plus de 10 cm, ce qui évite la condensation de vapeur d'eau sur l'optique de l'appareil photo et facilite la mise au point. En outre, de préférence, l'appareil photo, en particulier le téléphone mobile, n'est pourvu d'aucune optique spécifique pour l'acquisition des photos d'analyse, ce qui est notamment possible du fait de l'écartement de l'arcade dentaire lors de l'acquisition.

De préférence, une photo d'analyse est en couleurs, de préférence en couleurs réelles.

De préférence, l'acquisition de la photo d'analyse est effectuée par le patient, de préférence sans utilisation d'un support d'immobilisation de l'appareil photo, et notamment sans trépied.

**A l'étape A),** on crée une base d'apprentissage historique comportant des enregistrements historiques obtenus suivant un procédé d'enrichissement selon l'invention.

**A l'étape B),** on entraine un réseau de neurones « d'analyse », au moyen de la base d'apprentissage historique. Un tel entrainement est bien connu de l'homme de l'art.

Le réseau de neurones peut être en particulier choisi dans la liste fournie en préambule de la présente description.

Par cet entrainement, le réseau de neurones d'analyse apprend à évaluer, pour les photos qu'on lui présente, des valeurs pour les attributs évalués dans les descriptifs historiques.

Par exemple, chaque descriptif historique peut préciser une valeur (« oui » ou « non ») pour l'attribut « présence d'une malocclusion ? ».

L'entrainement consiste classiquement à fournir l'ensemble desdites vues hyperréalistes en entrée du réseau de neurones d'analyse, et l'ensemble desdits descriptifs historiques en sortie du réseau de neurones d'analyse.

**A l'étape C),** on présente la photo d'analyse au réseau de neurones d'analyse, et on obtient ainsi une évaluation pour les différents attributs, par exemple « oui », avec une probabilité de 95%, pour la présence d'une malocclusion.

Le procédé d'analyse peut être utilisé à des fins thérapeutiques ou non, par exemple à des fins de recherche ou à de fins purement esthétiques.

Il peut être utilisé par exemple pour évaluer une situation dentaire d'un patient au cours d'un traitement orthodontique, ou d'un traitement de blanchiment des dents. Il peut être utilisé pour surveiller le déplacement de dents ou l'évolution d'une pathologie dentaire.

Dans un mode de réalisation, le patient prend la photo d'analyse, par exemple avec son téléphone mobile, et un ordinateur, intégré dans le téléphone mobile ou avec lequel le téléphone mobile peut communiquer, met en œuvre le procédé. Le patient peut ainsi demander très facilement une analyse de sa situation dentaire, sans même devoir se déplacer, en se contentant de transmettre une ou de préférence plusieurs photos de ses dents.

L'analyse d'une photo d'analyse est notamment utile pour détecter une maladie rare.

### Simulation d'une situation dentaire

Un procédé de transformation, ne faisant pas partie de l'invention telle que revendiquée, peut être aussi mis en œuvre pour générer une vue hyperréaliste représentant une situation dentaire simulée au moyen d'un modèle tridimensionnel numérique d'une arcade dentaire. En particulier, la situation dentaire peut être simulée à un instant de simulation passé ou futur, dans le cadre d'un traitement thérapeutique ou non.

Un procédé de simulation d'une situation dentaire, ne faisant pas partie de l'invention telle que revendiquée, comporte les étapes suivantes :
A') à un instant actualisé, génération d'un modèle tridimensionnel numérique d'une arcade dentaire d'un patient, dit « modèle actualisé », de préférence comme décrit ci-dessus à l'étape 1) ;
B') déformation du modèle actualisé pour simuler l'effet du temps entre l'instant actualisé et un instant de simulation, antérieur ou postérieur à l'instant actualisé, par exemple de plus de 1 semaine, 1 mois ou 6 mois, de manière à obtenir un « modèle de simulation », de préférence comme décrit ci-dessus à l'étape 6) ;
C') acquisition d'une vue du modèle de simulation, ou « vue d'origine de simulation » ;
D') transformation de la vue d'origine de simulation en vue hyperréaliste de simulation, suivant un procédé de transformation selon l'invention.

La vue hyperréaliste de simulation apparaît ainsi comme une photo qui aurait été prise à l'instant de simulation. Elle peut être présentée au patient afin de lui présenter, par exemple, sa situation dentaire future ou passée, et ainsi le motiver à observer un traitement orthodontique.

A l'étape A'), le modèle actualisé est de préférence découpé en modèles élémentaires, de préférence comme décrit ci-dessus à l'étape 1). A l'étape B'), la déformation peut ainsi résulter d'un déplacement ou d'une déformation d'un ou plusieurs modèles élémentaires, et en particulier d'un ou plusieurs modèles de dent, par exemple pour simuler l'effet d'un appareil orthodontique.

### Transformation d'un modèle

Une vue d'un modèle d'origine rendue hyperréaliste suivant le procédé de transformation selon l'invention peut avantageusement être utilisée pour rendre hyperréaliste le modèle d'origine lui-même.

Un procédé de génération d'un modèle hyperréaliste à partir d'un modèle d'origine, et en particulier d'un modèle d'origine d'une arcade dentaire, ne faisant pas partie de l'invention telle que revendiquée, est divulguée et comporte les étapes successives suivantes :
A") acquisition d'une vue d'origine du modèle d'origine ;
B") transformation de la vue d'origine en vue hyperréaliste, suivant le procédé de transformation d'une vue d'origine en une vue hyperréaliste comportant les étapes 21) à 23) au-dessus ;
C") pour chaque pixel de la vue hyperréaliste, identification d'un voxel correspondant du modèle d'origine, c'est-à-dire représenté par ledit pixel sur le vue hyperréaliste, et affectation d'une valeur d'un attribut du pixel à un attribut du voxel.

L'attribut du pixel peut être en particulier relatif à son aspect, par exemple à sa couleur ou à sa luminosité. L'attribut du voxel est de préférence le même que l'attribut du pixel. Ainsi, on affecte par exemple la couleur du pixel au voxel.

Les procédés selon l'invention sont au moins en partie, de préférence entièrement mis en œuvre par ordinateur. Tout ordinateur peut être envisagé, notamment un PC, un serveur, ou une tablette.

Classiquement, un ordinateur comporte en particulier un processeur, une mémoire, une interface homme-machine, comportant classiquement un écran, un module de communication par internet, par WIFI, par Bluetooth^{®} ou par le réseau téléphonique. Un logiciel configuré pour mettre en œuvre le procédé de l'invention considéré est chargé dans la mémoire de l'ordinateur.

L'ordinateur peut être également connecté à une imprimante.

Bien entendu, l'invention n'est pas limitée aux modes de réalisation décrits ci-dessus et représentés.

En particulier, le patient n'est pas limité à un être humain. Un procédé selon l'invention peut être utilisé pour un autre animal.

Une base d'apprentissage n'est pas nécessairement constituée par des enregistrements de « paires ». Elle peut être non pairée.

La base d'apprentissage de transformation peut par exemple comporter
- un ensemble d'entrée constitué de « vues d'entrée » représentant chacune une vue d'un modèle tridimensionnel numérique de transformation modélisant une scène dentaire, de préférence de plus de 1 000, plus de 5 000, de préférence plus de 10 000, de préférence plus de 30 000, de préférence plus de 50 000, de préférence plus de 100 000 vues d'entrée, et
- un ensemble « de sortie » constitué de « photos de sortie » représentant chacun une scène dentaire, de préférence de plus de 1 000, plus de 5 000, de préférence plus de 10 000, de préférence plus de 30 000, de préférence plus de 50 000, de préférence plus de 100 000 photos de sortie,
les photos de sortie pouvant être indépendantes des vues de sortie, c'est-à-dire ne pas représenter les mêmes scènes dentaires.

La base d'apprentissage de texturation peut par exemple comporter
- un ensemble d'entrée constitué de modèles non texturés de manière réaliste représentant chacun une arcade dentaire, de préférence de plus de 1 000, plus de 5 000, de préférence plus de 10 000, de préférence plus de 30 000, de préférence plus de 50 000, de préférence plus de 100 000 modèles non texturés de manière réaliste, et
- un ensemble de sortie constitué de modèles texturés de manière réaliste représentant chacun une arcade dentaire, de préférence de plus de 1 000, plus de 5 000, de préférence plus de 10 000, de préférence plus de 30 000, de préférence plus de 50 000, de préférence plus de 100 000 modèles texturés de manière réaliste,
les modèles texturés de manière réaliste pouvant être indépendants des modèles non texturés de manière réaliste, c'est-à-dire ne pas représenter les mêmes arcades dentaires.

## Revendications

1. Procédé de texturation pour rendre hyperréaliste un modèle tridimensionnel numérique « d'origine », ledit procédé comportant les étapes suivantes :
21') création d'une base d'apprentissage « de texturation » non pairée constituée d'un ensemble d'entrée et d'un ensemble de sortie, l'ensemble d'entrée comportant des modèles non texturés de manière réaliste représentant chacun une arcade dentaire et l'ensemble de sortie comportant des modèles texturés de manière réaliste représentant chacun une arcade dentaire ou constituée de plus de 1 000 enregistrements « de texturation», chaque enregistrement de texturation comportant :
- un modèle non texturé de manière réaliste représentant une arcade dentaire, et une description dudit modèle précisant qu'il est non texturé de manière réaliste, ou
- un modèle texturé de manière réaliste représentant une arcade dentaire et une description dudit modèle précisant qu'il est texturé de manière réaliste ;
22') entraînement d'au moins un réseau de neurones « de texturation », au moyen de la base d'apprentissage de texturation, de manière qu'il apprenne à texturer de manière réaliste un modèle initialement non texturé ;
23') soumission du modèle d'origine audit au moins un réseau de neurones de texturation entrainé, de manière qu'il texture le modèle d'origine pour le rendre hyperréaliste.

2. Procédé de création d'une vue hyperréaliste d'un modèle tridimensionnel numérique « d'origine », ledit procédé comportant les étapes suivantes :
24') acquisition d'une vue hyperréaliste par observation du modèle d'origine rendu hyperréaliste par le procédé selon la revendication immédiatement précédente.

3. Procédé selon la revendication immédiatement précédente, dans lequel la vue hyperréaliste est traitée, après les étapes 21') à 23'), au moyen d'un moteur 3D.

4. Procédé d'enrichissement d'une base d'apprentissage historique, ledit procédé comportant les étapes suivantes :
1) génération d'un modèle tridimensionnel numérique d'une arcade dentaire, ou « modèle historique » ;
2) création d'une vue hyperréaliste dudit modèle historique à partir d'une vue d'origine du modèle historique, conformément à un procédé selon l'une des deux revendications immédiatement précédentes dans lequel le modèle d'origine est le modèle historique ;
3) création d'un descriptif de ladite vue hyperréaliste, ou « descriptif historique » ;
4) création d'un enregistrement historique constitué de la vue hyperréaliste et du descriptif historique, et ajout de l'enregistrement historique dans la base d'apprentissage historique.

5. Procédé selon la revendication immédiatement précédente, dans lequel, à l'étape 1), on génère une description du modèle historique, et dans lequel, à l'étape 3), on crée, au moins en partie, le descriptif historique à partir de la description dudit modèle historique.

6. Procédé selon la revendication immédiatement précédente, dans lequel
- le modèle historique est découpé en modèles élémentaires,
- à l'étape 1), on génère, dans la description du modèle historique, une description spécifique pour un modèle élémentaire représenté sur la vue hyperréaliste, et
- à l'étape 3), on inclut dans le descriptif historique, un descriptif spécifique pour la représentation dudit modèle élémentaire sur la vue hyperréaliste, au moins une partie du descriptif spécifique étant héritée de ladite description spécifique.

7. Procédé selon l'une quelconque des trois revendications immédiatement précédentes, comportant, après l'étape 4), l'étape 5) suivante :
5) modification de la vue hyperréaliste, puis reprise à l'étape 3).

8. Procédé selon l'une quelconque des quatre revendications immédiatement précédentes, comportant après l'étape 4) ou l'étape 5) optionnelle, l'étape suivante 6) :
6) déformation du modèle historique, puis reprise à l'étape 1).

9. Procédé selon la revendication immédiatement précédente, dans lequel le modèle historique est déformé pour représenter une situation dentaire théorique.

10. Procédé selon l'une quelconque des deux revendications immédiatement précédentes, dans lequel la déformation consiste en :
- un déplacement d'un modèle de dent,
- une déformation d'un modèle de dent,
- une suppression d'un modèle de dent,
- une déformation d'un modèle de mâchoire.

11. Procédé selon l'une quelconque des sept revendications immédiatement précédentes, dans lequel la vue d'origine est une vue extra-orale.

12. Procédé d'analyse d'une photo d'analyse représentant une arcade dentaire d'un patient « d'analyse », ledit procédé comportant les étapes suivantes :
A) création d'une base d'apprentissage historique comportant plus de 1 000 enregistrements historiques, en mettant en œuvre un procédé d'enrichissement selon l'une quelconque des huit revendications immédiatement précédentes ;
B) entraînement d'au moins un réseau de neurones « d'analyse », au moyen de la base d'apprentissage historique, de manière qu'il apprenne à évaluer, pour les photos qu'on lui présente, des valeurs pour des attributs évalués dans les descriptifs historiques ;
C) soumission, au réseau de neurones entrainé, de la photo d'analyse de manière à obtenir un descriptif de la photo d'analyse.

13. Procédé selon la revendication immédiatement précédente, dans lequel la photo d'analyse est acquise au moyen d'un appareil photo choisi parmi un téléphone mobile, un appareil photo dit « connecté », une montre dite « intelligente », ou « smartwatch », une tablette ou un ordinateur personnel, fixe ou portable, comportant un système d'acquisition de photos.

14. Procédé selon l'une quelconque des revendications précédentes, dans lequel à l'étape 21'), les modèles texturés de manière réaliste sont générés en texturant des modèles initialement non texturés de manière réaliste suivants les étapes successives suivantes :
A") acquisition d'une vue d'origine du modèle d'origine ;
B")transformation de la vue d'origine en vue hyperréaliste, suivant un procédé de transformation d'une vue d'origine en une vue hyperréaliste ;
C")pour chaque pixel de la vue hyperréaliste, identification d'un voxel correspondant du modèle d'origine ; et affectation d'une valeur d'un attribut du pixel à un attribut du voxel.
le procédé de transformation d'une vue d'origine en une vue hyperréaliste comportant les étapes suivantes :
21) création d'une base d'apprentissage « de transformation » non pairée ou constituée de plus de 1 000 enregistrements « de transformation », chaque enregistrement de transformation comportant :
- une photo « de transformation » représentant une scène dentaire, et
- une vue d'un modèle tridimensionnel numérique « de transformation » modélisant ladite scène dentaire, ou « vue de transformation », la vue de transformation représentant ladite scène comme la photo de transformation ;
22) entraînement d'au moins un réseau de neurones « de transformation », au moyen de la base d'apprentissage de transformation, de manière qu'il apprenne comment transformer une vue quelconque d'un modèle tridimensionnel numérique quelconque, en une vue hyperréaliste ;
23) soumission de la vue d'origine audit au moins un réseau de neurones de transformation, de manière qu'il la transforme en une vue hyperréaliste.

## Patentansprüche

1. Texturierungsverfahren, um ein "originales" digitales dreidimensionales Modell hyperrealistisch zu gestalten, das Verfahren umfassend die folgenden Schritte:
21') Erstellen einer ungepaarten "Texturierungs"-Lernbasis, die aus einem Eingabesatz und einem Ausgabesatz besteht, der Eingabesatz umfassend realistisch nicht texturierte Modelle, die jeweils einen Zahnbogen darstellen, und der Ausgabesatz umfassend realistisch texturierte Modelle, die jeweils einen Zahnbogen darstellen, oder aus mehr als 1.000 "Texturierungs"-Datensätzen besteht, jeder Texturierungsdatensatz umfassend:
- ein realistisch nicht texturiertes Modell, das einen Zahnbogen darstellt, und eine Beschreibung des Modells, aus der hervorgeht, dass es realistisch nicht texturiert ist, oder
- ein realistisch texturiertes Modell, das einen Zahnbogen darstellt, und eine Beschreibung des Modells, aus der hervorgeht, dass es realistisch texturiert ist;
22') Trainieren von mindestens einem neuronalen "Texturierungs"-Netz mittels der Texturierungslernbasis, sodass es lernt, ein anfänglich nicht texturiertes Modell realistisch zu texturieren;
23') Einreichen des originalen Modells an mindestens ein trainiertes neuronales Netz für Texturierung, sodass es das originale Modell texturiert, um es hyperrealistisch zu gestalten.

2. Verfahren zum Erstellen einer hyperrealistischen Ansicht eines "originalen" digitalen dreidimensionalen Modells, das Verfahren umfassend die folgenden Schritte:
24') Erfassen einer hyperrealistischen Ansicht durch Beobachtung des originalen Modells, das durch das Verfahren nach dem unmittelbar vorstehenden Anspruch hyperrealistisch gestaltet wird.

3. Verfahren nach dem unmittelbar vorstehenden Anspruch, wobei die hyperrealistische Ansicht nach den Schritten 21') bis 23') mittels einer 3D-Engine verarbeitet wird.

4. Verfahren zum Vervollständigen einer historischen Lernbasis, das Verfahren umfassend die folgenden Schritte:
1) Erzeugen eines digitalen dreidimensionalen Modells eines Zahnbogens oder eines "historischen Modells";
2) Erstellen einer hyperrealistischen Ansicht des historischen Modells aus einer originalen Ansicht des historischen Modells nach einem Verfahren nach einem der zwei unmittelbar vorstehenden Ansprüche, wobei das originale Modell das historische Modell ist;
3) Erstellen einer Erklärung der hyperrealistischen Ansicht oder einer "historischen Erklärung";
4) Erstellen einer historischen Aufzeichnung, die aus der hyperrealistischen Ansicht und der historischen Erklärung besteht, und Hinzufügen des historischen Datensatzes in der historischen Lernbasis.

5. Verfahren nach dem unmittelbar vorstehenden Anspruch, wobei in Schritt 1) eine Beschreibung des historischen Modells erzeugt wird und wobei in Schritt 3) die historische Erklärung mindestens teilweise aus der Beschreibung des historischen Modells erstellt wird.

6. Verfahren nach dem unmittelbar vorstehenden Anspruch, wobei
- das historische Modell in Elementarmodelle aufgeteilt ist,
- in Schritt 1), in der Beschreibung des historischen Modells, eine spezifische Beschreibung für ein Elementarmodell, das in der hyperrealistischen Ansicht dargestellt wird, erzeugt wird, und
- in Schritt 3), in der historischen Erklärung, eine spezifische Erklärung für die Darstellung des Elementarmodells in der hyperrealistischen Ansicht eingeschlossen wird, wobei mindestens ein Teil der spezifischen Erklärung aus der spezifischen Beschreibung übernommen wird.

7. Verfahren nach einem der drei unmittelbar vorstehenden Ansprüche, umfassend nach Schritt 4) den folgenden Schritt 5):
5) Modifizieren der hyperrealistischen Ansicht, dann Wiederholen ab Schritt 3).

8. Verfahren nach einem der vier unmittelbar vorstehenden Ansprüche, umfassend nach Schritt 4) oder Schritt 5) optional Schritt 6):
6) Verformen des historischen Modells, dann Wiederholen ab Schritt 1).

9. Verfahren nach dem unmittelbar vorstehenden Anspruch, wobei das historische Modell zum Darstellen einer theoretischen Zahnsituation verformt wird.

10. Verfahren nach einem der zwei unmittelbar vorstehenden Ansprüche, wobei die Verformung besteht aus:
- Bewegen eines Zahnmodells,
- Verformen eines Zahnmodells,
- Löschen eines Zahnmodells,
- Verformen eines Kiefermodells.

11. Verfahren nach einem der sieben unmittelbar vorstehenden Ansprüche, wobei die originale Ansicht eine extraorale Ansicht ist.

12. Verfahren zum Analysieren eines Analysefotos, das einen "Analyse"-Zahnbogen eines Patienten darstellt, das Verfahren umfassend die folgenden Schritte:
A) Erstellen einer historischen Lernbasis, umfassend mehr als 1.000 historische Datensätze, bei Implementieren eines Vervollständigungsverfahrens nach einem der acht unmittelbar vorstehenden Ansprüche;
B) Trainieren von mindestens einem neuronalen "Analyse"-Netz mittels der historischen Lernbasis, sodass es lernt, für die ihm vorgelegten Fotos Werte für Attribute auszuwerten, die in den historischen Erklärungen ausgewertet wurden;
C) Einreichen, an das trainierte neuronale Netz, des Analysefotos, sodass eine Erklärung des Analysefotos erhalten wird.

13. Verfahren nach dem unmittelbar vorstehenden Anspruch, wobei das Analysefoto mittels eines Fotoapparats erfasst wird, der aus einem Mobiltelefon, einem als "vernetzt" bezeichneten Fotoapparat, einer als "intelligent" oder "Smartwatch" bezeichneten Uhr, einem Tablet oder einem PC, stationär oder tragbar, ausgewählt ist, umfassend ein Fotoerfassungssystem.

14. Verfahren nach einem der vorstehenden Ansprüche, wobei in Schritt 21') die realistisch texturierten Modelle bei Texturieren von anfänglich realistisch nicht texturierten Modellen erzeugt werden, nach den folgenden aufeinanderfolgenden Schritten:
A") Erfassen einer originalen Ansicht des originalen Modells;
B") Umwandeln der originalen Ansicht in eine hyperrealistische Ansicht, nach einem Verfahren des Umwandelns einer originalen Ansicht in eine hyperrealistische Ansicht;
C") für jedes Pixel der hyperrealistischen Ansicht, Identifizieren eines entsprechenden Voxels des originalen Modells; und Zuweisen eines Werts eines Attributs des Pixels zu einem Attribut des Voxels.
das Verfahren des Umwandelns einer originalen Ansicht in eine hyperrealistische Ansicht, umfassend die folgenden Schritte:
21) Erstellen einer "Umwandlungs"-Lernbasis, die ungepaart ist, oder die aus mehr als 1.000 "Umwandlungs"-Datensätzen besteht, jeder Umwandlungsdatensatz umfassend:
- ein "Umwandlungs"-Foto, das eine Zahnszene darstellt, und
- eine Ansicht eines digitalen dreidimensionalen "Umwandlungs"-Modells, das die Zahnszene modelliert, oder eine "Umwandlungsansicht", wobei die Umwandlungsansicht die Szene als das Umwandlungsfoto darstellt;
22) Trainieren von mindestens einem neuronalen "Umwandlungs"-Netz mittels der Umwandlungslernbasis, sodass es lernt, wie eine beliebige Ansicht eines beliebigen digitalen dreidimensionalen Modells in eine hyperrealistische Ansicht umgewandelt wird;
23) Einreichen der originalen Ansicht an mindestens ein neuronales Umwandlungsnetz, sodass es sie in eine hyperrealistische Ansicht umwandelt.

## Claims

1. A texturing method to make a digital three-dimensional "original" model hyperrealistic, said method comprising the following steps:
21') creating an unpaired "texturing" learning base consisting of an input set and an output set, the input set comprising non-realistically textured models each representing a dental arch and the output set comprising realistically textured models each representing a dental arch or consisting of more than 1,000 "texturing" records, each texturing record comprising:
- a non-realistically textured model representing a dental arch, and a description of said model specifying that it is non-realistically textured, or
- a realistically textured model representing a dental arch, and a description of said model specifying that it is realistically textured;
22') training at least one "texturing" neural network, by means of the texturing learning base, so that it learns to realistically texture an initially untextured model;
23') submitting the original model to said at least one trained texturing neural network, so that it textures the original model to make it hyperrealistic.

2. A method for creating a hyperrealistic view of a digital three-dimensional "original" model, said method comprising the following steps:
24') acquiring a hyperrealistic view by observing the original model made hyperrealistic by the method according to the immediately preceding claim.

3. The method according to the immediately preceding claim, wherein the hyperrealistic view is processed, after steps 21') to 23'), by means of a 3D engine.

4. A method for enriching a historical learning base, said method comprising the following steps:
1) generating a digital three-dimensional model of a dental arch, or "historical model";
2) creating a hyperrealistic view of said historical model from an original view of the historical model, according to a method according to one of the two immediately preceding claims, wherein the original model is the historical model;
3) creating a description of said hyperrealistic view, or "historical description";
4) creating a historical record consisting of the hyperrealistic view and the historical description, and adding the historical record to the historical learning base.

5. The method according to the immediately preceding claim, wherein, in step 1), a description of the historical model is generated, and wherein, in step 3), the historical description is created, at least in part, from the description of said historical model.

6. The method according to the immediately preceding claim, wherein
- the historical model is divided into elementary models,
- in step 1), a specific description for an elementary model represented in the hyperrealistic view is generated in the description of the historical model, and
- in step 3), a specific description for the representation of said elementary model in the hyperrealistic view is included in the historical description, at least part of the specific description being inherited from said specific description.

7. The method according to any one of the three immediately preceding claims, comprising, after step 4), the following step 5):
5) modifying the hyperrealistic view, then returning to step 3).

8. The method according to any one of the four immediately preceding claims, comprising, after step 4) or optional step 5), the following step 6):
6) deforming the historical model, then returning to step 1).

9. The method according to the immediately preceding claim, wherein the historical model is deformed to represent a theoretical dental situation.

10. The method according to any one of the two immediately preceding claims, wherein the deformation consists in:
- moving a tooth model,
- deforming a tooth model,
- removing a tooth model,
- deforming a jaw model.

11. The method according to any one of the seven immediately preceding claims, wherein the original view is an extraoral view.

12. A method for analyzing an analysis photo representing a dental arch of an "analysis" patient, said method comprising the following steps:
A) creating a historical learning base comprising more than 1,000 historical records, by implementing an enrichment method according to any one of the eight immediately preceding claims;
B) training at least one "analysis" neural network, by means of the historical learning base, so that it learns to evaluate, for the photos presented to it, values for attributes evaluated in the historical descriptions;
C) submitting the analysis photo to the trained neural network so as to obtain a description of the analysis photo.

13. The method according to the immediately preceding claim, wherein the analysis photo is acquired by means of a camera chosen from among a mobile telephone, a "connected" camera, a "smartwatch", a tablet or a personal computer, fixed or portable, comprising a photo acquisition system.

14. The method according to any one of the preceding claims, wherein in step 21'), the realistically textured models are generated by texturing initially non-realistically textured models according to the following successive steps:
A") acquiring an original view of the original model;
B") transforming the original view into a hyperrealistic view, using a method for transforming an original view into a hyperrealistic view;
C") for each pixel of the hyperrealistic view, identifying a corresponding voxel of the original model; and assigning a value of an attribute of the pixel to an attribute of the voxel.
the method for transforming an original view into a hyperrealistic view comprising the following steps:
21) creating a "transformation" learning base that is unpaired or consisting of more than 1,000 "transformation" records, each transformation record comprising:
- a "transformation" photo representing a dental scene, and
- a view of a "transformation" digital three-dimensional model modeling said dental scene, or "transformation view", the transformation view representing said scene as the transformation photo;
22) training at least one "transformation" neural network, by means of the transformation learning base, so that it learns how to transform any view of any digital three-dimensional model into a hyperrealistic view;
23) submitting the original view to said at least one transformation neural network, so that it transforms it into a hyperrealistic view.
